# EUROPÄISCHE PATENTSCHRIFT

(11) **EP 2 130 259 B1**
(45) Veröffentlichungstag und Bekanntmachung des Hinweises auf die Patenterteilung: **28.11.2012**
(21) Anmeldenummer: 08734644.1
(22) Anmeldetag: 18.03.2008
(51) Int. Cl.: H01M 8/04, H01M 16/00

(54) **BRENNSTOFFZELLENSYSTEM UND VERFAHREN ZUR REGELUNG EINES BRENNSTOFFZELLENSYSTEMS**
FUEL CELL SYSTEM AND METHOD FOR REGULATING A FUEL CELL SYSTEM
SYSTÈME DE PILE COMBUSTIBLE ET PROCÉDÉ DE RÉGULATION D'UN SYSTÈME DE PILE COMBUSTIBLE

(30) Priorität: 23.03.2007 DE 102007014616
(43) Veröffentlichungstag der Anmeldung: 09.12.2009
(73) Patentinhaber: Forschungszentrum Jülich Gmbh, 52428 Jülich (DE)
(72) Erfinder: MÜLLER, Martin, 53489 Sinzig (DE); MAINTZ, Andreas, 52499 Baesweiler (DE); WILHELM, Jörg, 52353 Düren (DE); JANSSEN, Holger, 52428 Jülich (DE); STOLTEN, Detlef, 52076 Aachen (DE)
(74) Vertreter: Jostarndt, Hans-Dieter
(86) Internationale Anmeldenummer: PCT/EP2008/002154
(87) Internationale Veröffentlichungsnummer: WO 2008/116579

(56) Entgegenhaltungen:
- EP-A- 1 207 578
- DE-A1- 10 065 446
- US-A1- 2004 170 038

## Beschreibung

Die Erfindung betrifft ein Brennstoffzellensystem für mobile Anwendungen, umfassend eine Brennstoffzelle und einen an die Brennstoffzelle angekoppelten DC/DC-Wandler, der an einen Energiespeicher ankoppelbar ist, ein aktives Hybridsystem mit einem solchen Brennstoffzellensystem sowie einem Energiespeicher, des Weiteren ein Verfahren zur kennfeldunterstützten Regelung einer Brennstoffzellenspannung.

Brennstoffzellensysteme in Hybridsystemen für mobile Anwendungen müssen für die dynamischen Anforderungen des Verbrauchers konzipiert und ausgelegt sein. Der grundsätzliche Aufbau umfasst dabei in der Regel eine Brennstoffzelle und einen Energiespeicher. Unterschiede bei der Ausführung derartiger Hybridsysteme bestehen insbesondere bei der elektrotechnischen Kopplung von Brennstoffzelle und Energiespeicher sowie bei der Steuerung und Regelung des Gesamtsystems und insbesondere der Brennstoffzelle.

Die bekannten Hybridsysteme, bestehend aus Brennstoffzelle und Energiespeicher, lassen sich grundsätzlich in passive und aktive Hybridsysteme unterscheiden. Bei passiven Hybridsystemen sind Brennstoffzelle und Energiespeicher direkt parallel miteinander verbunden, d.h. sie werden in jedem Betriebszustand des Gesamtsystems auf dem gleichen Spannungsniveau betrieben. Aktive Systeme zeichnen sich durch eine Entkopplung von Brennstoffzelle und Energiespeicher durch DC/DC-Wandler aus. Damit lässt sich prinzipiell unabhängig von der Lastanforderung die Aufteilung der Energieflüsse auf Brennstoffzelle und Energiespeicher beeinflussen. Eine Möglichkeit zur Steuerung aktiver Systeme besteht darin, den Ladezustand des Energiespeichers mittels Zweipunktregelung zwischen einem Minimal- und einem Maximalwert zu halten. Um den Ladezustand des Energiespeichers zwischen den zwei Grenzwerten zu halten, muss der Energiespeicher von Zeit zu Zeit von der Brennstoffzelle geladen werden. Dies geschieht nach dem bekannten Stand der Technik in der Weise, dass die Brennstoffzelle mit ihrer Maximalleistung betrieben wird.

Bei passiven Systemen wird der Brennstoffzelle die Bordspannung, d.h. die Spannung am Energiespeicher des Gesamtsystems, aufgeprägt. Hierfür ist es erforderlich, die Komponenten sehr genau aufeinander abzustimmen. Es ist nicht möglich, die Brennstoffzelle aktiv in einem anderen Arbeitspunkt zu betreiben. Problematisch sind hier zwei Punkte:
Erstens können unter Umständen Spannungen auftreten, welche die Brennstoffzelle schädigen bzw. zu beschleunigter Alterung (unvorteilhafte Veränderung der elektrochemischen Eigenschaften mit der Zeit) führen. Zweitens kann bei einer Alterung der Brennstoffzelle nicht aktiv auf die Brennstoffzellenspannung Einfluss genommen werden, um z.B. durch eine Spannungsabsenkung die Leistung aus der Brennstoffzelle zu erhalten.

Bei aktiven Systemen ist eine unabhängige Betriebsweise der Brennstoffzelle möglich. Allerdings wird beim oben beschriebenen Stand der Technik nicht darauf geachtet, ob die Betriebsweise der Brennstoffzelle Einfluss auf deren Alterung hat und wie dieser Performanceverlust der Brennstoffzelle kompensiert werden kann.

Aufgabe der Erfindung ist es, eine Brennstoffzelle in einem dynamisch betriebenen und aktiven Hybridsystem so zu betreiben, dass bei maximal möglicher Belastung der Brennstoffzelle Betriebszustände verhindert werden, die zu einer beschleunigten Alterung der Brennstoffzelle führen können.

Die Aufgabe wird erfindungsgemäß durch ein Brennstoffzellensystem für mobile Anwendungen gelöst, welches eine Brennstoffzelle (1) und einen an die Brennstoffzelle (1) angekoppelten DC/DC-Wandler (2) umfasst, der an einen Energiespeicher (3) ankoppelbar ist, wobei eine Steuer- und Regeleinheit (4) mit der Brennstoffzelle (1) und dem DC/DC-Wandler (2) verbunden ist, wobei in dieser Steuer- und Regeleinheit (4) ein Begrenzungskennfeld U_{BZ,min} = f der Brennstoffzelle (1) hinterlegt ist und wobei die Steuer- und Regeleinheit (4) einen PID-Regler (7) umfasst, der einen Sollwertes U_{BZ,soll} mit einem Istwert U_{BZ,Ist} der Brennstoffzelle (1) vergleicht und daraus eine Stellgröße I_{DC/DC,Soll} bestimmt und an den DC/DC-Wandler (2) leitet, wobei der Sollwert U_{BZ,Soll} mit dem in der Steuer- und Regeleinheit (4) hinterlegten, von einer Temperatur T_{BZ} abhängigen Begrenzungskennfeld U_{BZ,min} = f (T_{BZ}) bestimmt wird.

Außerdem ist erfindungsgemäß ein Begrenzer vorgesehen, der die Brennstoffzellenspannung begrenzt. Der Begrenzer ist ein Element, beispielsweise ein Logikelement, das so ausgestaltet ist, dass es Vergleiche zwischen einem gewünschten Zustand wenigstens einer Betriebsgröße und wenigstens einem zulässigen Zustand der Betriebsgröße durchführt und aufgrund dieses Vergleichs eine Sollwertvorgabe vornimmt.

Auf diese Weise besteht die Möglichkeit, auf die Betriebsspannung U_{BZ} der Brennstoffzelle Einfluss zu nehmen.

Der Einsatz eines PID-Reglers, erweist sich dann als besonders vorteilhaft, wenn eine Regelgröße einen gewünschten Wert möglichst genau einhalten soll. Dabei tritt evtl. noch hinzu, dass sich die Führungsgröße ändert. Regler und Stellglied müssen dann kontinuierlich arbeiten. Im Fall des erfindungsgemäßen Brennstoffzellensystems liegt mit der Größe U_{BZ,Soll} eine Führungsgröße vor, die sich ändern kann, wie weiter unten beschrieben wird. Für solche Anwendungen haben sich lineare Regler, wie beispielsweise PID-Regler, bewährt. In der Praxis sind PID-Regler meistens keine einzelnen Geräte, sondern Kompaktregler. Die Struktur eines solchen Reglers ist eine Parallelschaltung von Proportional-, Integrier- und Differenzierglied (PID).

Das Brennstoffzellensystem kann verschiedene Typen von Brennstoffzellen umfassen, beispielsweise Brennstoffzellen vom Typ PEFC, DMFC oder HT-PEFC.

Die Aufgabe wird weiterhin gelöst durch ein aktives Hybridsystem, das ein erfindungsgemäßes Brennstoffzellensystem sowie einen Energiespeicher umfasst, der insbesondere als Blei-, NiMH-, Li-Ionen-, NiCd-Akkumulator oder Supercap ausgebildet ist.

Des Weiteren wird die Aufgabe der Erfindung durch ein Verfahren zur Regelung einer Brennstoffzellenspannung U_{BZ,Ist} in einem Brennstoffzellensystem gelöst, umfassend eine Brennstoffzelle (1), einen an die Brennstoffzelle (1) angekoppelten DC/DC-Wandler (2), der an einen Energiespeicher (3) ankoppelbar ist, und eine zwischen der Brennstoffzelle (1) und dem DC/DC-Wandler (2) angeordnete Steuer- und Regeleinheit (4), umfassend die folgenden Schritte:
- Aus einer Temperatur T_{BZ} wird mittels eines Begrenzungskennfeldes U_{BZ,min} = f (T_{BZ}), welches in der Steuer- und Regeleinheit (4) hinterlegt ist, eine Minimalgröße U_{BZ,min} ermittelt,
- Es wird eine Sollgröße U_{BZ,Soll} so gewählt, dass gilt U_{BZ,Soll} ≥ U_{BZ,min}.
- Die Steuer- und Regeleinheit (4) empfängt die Regelgröße U_{BZ,Ist} vergleicht die Regelgröße U_{BZ,Ist} mit einer vorgegebenen Sollgröße U_{BZ,Soll} und bestimmt daraus eine Stellgröße I_{DC/DC,Soll},
- die Steuer- und Regeleinheit (4) leitet die Stellgröße I_{DC/DC,Soll} an den DC/DC-Wandler (2) weiter,
- der DC/DC-Wandler (2) belastet in Abhängigkeit von der Stellgröße I_{DC/DC,Soll} die Brennstoffzelle (2) mit dem Strom I_{BZ,Ist}.

Mit dem Verfahren wird die Brennstoffzelle vor zu starker Belastung bzw. vor durch ungünstige Betriebszustände bedingter beschleunigter Alterung geschützt. Dies geschieht dadurch, dass die Brennstoffzellenspannung U_{BZ} einen Minimalwert U_{BZ,min} nicht unterschreitet, wobei die Minimalgröße U_{BZ,min} als Begrenzungskennfeld U_{BZ,min} eine Funktion f ist, die insbesondere als von der Temperatur T_{BZ} abhängiges Begrenzungskennfeld U_{BZ,min} = f (T_{BZ}), in der Steuer- und Regeleinheit hinterlegt wird.

Damit wird dem Umstand Rechnung getragen, dass der kritische Minimalwert U_{BZ,min} wesentlich von der Temperatur T_{BZ} beeinflusst wird.

Eine besondere Ausführungsform des Verfahrens sieht vor, dass die Minimalgröße U_{BZ,min} als Begrenzungskennfeld U_{BZ,min} als Funktion f einer ungealterten Brennstoffzelle in der Steuer- und Regeleinheit hinterlegt wird. Das Kennfeld einer ungealterten Brennstoffzelle wird auch als Nennkennfeld bezeichnet.

Durch Messungen an wenigstens einer anderen Brennstoffzelle mit möglichst vergleichbaren oder sogar identischen physikalischen Eigenschaften gewinnt man ein Begrenzungskennfeld U_{BZ,min} als Funktion der Temperatur und gegebenenfalls weiterer Werte, welches brauchbare Betriebsparameter für vergleichsweise neue Brennstoffzellen liefert.

In einer weiteren bevorzugten Ausführungsform der Erfindung wird bei erkannter Alterung der Brennstoffzelle auf Grundlage des Nennkennfeld der ungealterten Brennstoffzelle ein Nennkennfeld der gealterten Brennstoffzelle ermittelt. Dieser Vorgang wird nachfolgend als Altersanpassung bezeichnet. Die Altersanpassung wird solange fortgeführt, bis kein sinnvoller Betrieb der Brennstoffzelle mehr möglich ist. Die Steuer- und Regeleinheit signalisiert das Erfordernis, die Brennstoffzelle auszutauschen.

In einer bevorzugten Ausführungsform des Verfahrens vergleicht die Steuer- und Regeleinheit die Regelgröße U_{BZ,Ist} mit der vorgegebenen Sollgröße U_{BZ,Soll} und bestimmt daraus eine Stellgröße I_{DC/DC,Soll}. Hierbei gilt: U_{BZ,Soll} = U_{BZ,min}.

Auf diese Weise wird der Minimalwert U_{BZ,min} zu dem Sollwert U_{BZ,Soll} für die Regelung der Brennstoffzellenspannung U_{BZ}. Dadurch wird gewährleistet, dass die Brennstoffzelle im Fahrbetrieb optimal ausgelastet wird, ohne dass sie dabei überlastet wird.

Die Aufgabe wird darüber hinaus gelöst durch ein Verfahren zur Kennfeldregelung einer Brennstoffzelle, umfassend Strom/Spannungs-Kennlinien der Brennstoffzelle in Abhängigkeit von mindestens einer Betriebsgröße, beispielsweise T_{BZ,} λ_{Luft}, umfassend die folgenden Schritte:
- Bestimmen von aktuellen Werten der Betriebsgrößen, beispielsweise T_{BZ,} λ_{Luft}, der Brennstoffzelle.
- Messen der Spannung U_{BZ,Ist} und der Stromstärke I_{BZ,Ist} der Brennstoffzelle,
- Berechnen einer fiktiven Stromstärke Iₜₕₑₒ aus der gemessenen Spannung U_{BZ,Ist} und aktuellen Werten wenigstens einer Betriebsgröße, beispielsweise T_{BZ}, λ_{Luft},
- Vergleichen der gemessenen Stromstärke **I_{BZ,Ist}** mit der fiktiven Stromstärke **I**ₜₕₑₒ, und Ermittlung von Betriebsgrößenkorrekturfaktoren der Betriebsgrößen T_{BZ,} λ_{Luft} aus der Abweichung der beiden Ströme.
- Berechnung der aktuellen Werte der Betriebsgrößen T_{BZ,} λ_{Luft} auf der Basis der Betriebsgrößenkorrekturfaktoren und Übermittlung dieser Werte an eine Einrichtung zur Steuerung von Betriebsgrößen,
- Durchlaufen dieser Schritte solange bis gilt: I_{BZ,Ist} = Iₜₕₑₒ.

Auf diese Weise werden die Betriebsgrößen der Brennstoffzelle dem altersbedingten Nachlassen ihrer Leistungsfähigkeit angepasst, und es kann die Leistungsfähigkeit der Brennstoffzelle trotz einsetzender Alterung zumindest noch für eine erheblich verlängerte Betriebsdauer erhalten werden.

Ausgewählt werden kann eine Betriebsgröße aus der Gruppe der Größen Temperatur T_{BZ,} Luftüberschuss λ_{Luft}, Luftvolumenstrom *dldt* V_{Luft}, Brennstoffkonzentration, Brennstoffmassenstrom *dldt* m_{Brennstoff}, Betriebsdruck, Brennstoff-, Luftbefeuchtung oder Brennstoffumwälzrate.

Die Erfindung wird im Folgenden beispielhaft anhand der Zeichnungen erläutert. Es zeigen:
- Figur 1: eine schematische Darstellung einer Verschaltung von Brennstoffzelle und Energiespeicher in einem aktiven Hybridsystem und
- Figur 2: eine Regelungstruktur eines erfindungsgemäßen Brennstoffzellensystems.

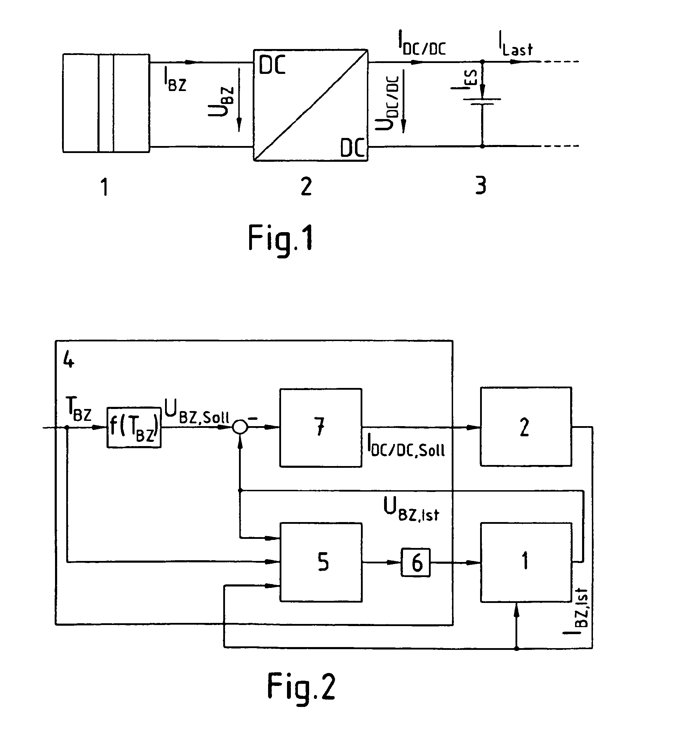

Die Figur 1 zeigt eine schematische Darstellung einer Verschaltung einer Brennstoffzelle 1 und eines Energiespeichers 3 in einem aktiven Hybridsystem. Zwischen der Brennstoffzelle 1 und dem Energiespeicher 3 ist ein DC/DC-Wandler 2 angeordnet, bei dem der Ausgangsstrom I_{DC/DC} aktiv eingestellt werden kann. Die nicht abgebildete Steuer- und Regeleinheit 4 gibt einen Sollwert I_{DC/DC,Soll} für den Strom vor, und der DC/DC-Wandler 2 regelt diesen ein.

In der Figur 2 ist eine Regelungsstruktur eines erfindungsgemäßen Brennstoffzellensystems dargestellt. In diesem Beispiel wird der Minimalwert U_{BZ,min} als Sollwert U_{BZ,Soll} für die Brennstoffzellenspannung herangezogen. Auf diese Weise wird eine optimale Auslastung der Brennstoffzelle 1 im Fahrbetrieb gewährleistet, ohne dass die Brennstoffzelle 1 überlastet wird. Eine Steuer- und Regeleinheit 4 umfasst einen PID-Regler 7, eine Kennfeldregelung 5 und eine Einrichtung 6 zur Steuerung mindestens einer Betriebsgröße.

Der PID-Regler 7 hat die Aufgabe, die Brennstoffzellenspannung U_{BZ} auf einen Sollwert U_{BZ,Soll} einzuregeln. Als Stellgröße dient der Strom I_{DC/DC,Soll} am Ausgang des DC/DC-Wandlers 2. Der sich einstellende Brennstoffzellenstrom I_{BZ,Ist} ist Eingangsparameter für die Kennfeldregelung 5 und die Brennstoffzelle 1. Wenn die Brennstoffzelle 1 mit dem Strom I_{BZ,Ist} belastet ist, ergibt sich als Ausgangswert ein aktueller Istwert U_{BZ,Ist} der Brennstoffzellenspannung in Abhängigkeit von den Betriebsgrößen, wobei der Istwert U_{BZ,Ist} am PID-Regler 7 mit dem vorgegebenen Sollwert U_{BZ,Soll} verglichen wird. Bei einer Regelabweichung I U_{BZ,Soll} - U_{BZ,Ist} I > 0 wird die Stellgröße I_{DC/DC,Soll} korrigiert, und die Regelungsschleife wird erneut durchlaufen.

Aufgabe der Kennfeldregelung 5 ist es, Abweichungen der Brennstoffzellenperformance vom Normalzustand durch Korrektur von Betriebsgrößen auszugleichen. Die Kennfeldregelung 5 ist damit ein vorteilhaftes Element des erfindungsgemäßen Brennstoffzellensystems. Hierbei ist der Steuer- und Regeleinheit 4 zunächst das Nennkennfeld einer ungealterten Brennstoffzelle 1 hinterlegt. Das Kennfeld umfasst dabei Strom/Spannungs-Kennlinien der Brennstoffzelle 1 in Abhängigkeit von Betriebsgrößen. Eingänge in die Kennfeldregelung 5 sind die gemessenen Werte für die Stackspannung **U_{BZ,Ist}** und den Stackstrom I_{BZ,Ist}, d.h. die Spannung U_{Bz,Ist} am Brennstoffzellenstapel und die Stromstärke I_{BZ,Ist} am Brennstoffzellenstapel.

### Bezugszeichen:

- 1: Brennstoffzelle
- 2: DC/DC-Wandler
- 3: Energiespeicher
- 4: Steuer- und Regeleinheit
- 5: Kennfeldregelung
- 6: Einrichtung zur Steuerung der Betriebsgrößen
- 7: PID-Regler

## Patentansprüche

1. Brennstoffzellensystem für mobile Anwendungen, umfassend eine Brennstoffzelle (1) und einen an die Brennstoffzelle (1) angekoppelten DC/DC-Wandler (2), der an einen Energiespeicher (3) ankoppelbar ist,
**dadurch gekennzeichnet,**
**dass** eine Steuer- und Regeleinheit (4) mit der Brennstoffzelle (1) und dem DC/DC-Wandler (2) verbunden ist,
**dass** in dieser Steuer- und Regeleinheit (4) ein Begrenzungskennfeld U_{B,Zmin} = f der Brennstoffzelle (1) hinterlegt ist und
**dass** die Steuer- und Regeleinheit (4) einen PID-Regler (7) umfasst, der einen Sollwertes U_{BZ,Soll} mit einem Istwert U_{BZ,Ist} der Brennstoffzelle (1) vergleicht und daraus eine Stellgröße I_{DC/DC,Soll} bestimmt und an den DC/DC-Wandler (2) leitet, wobei der Sollwert U_{BZ,Soll} mit dem in der Steuer- und Regeleinheit (4) hinterlegten, von einer Temperatur T_{BZ} abhängigen Begrenzungskennfeld U_{BZ,min} = f (T_{BZ}) bestimmt wird.

2. Brennstoffzellensystem nach Anspruch 1,
**dadurch gekennzeichnet**
**dass** eine Brennstoffzelle (1) vom Typ PEFC, DMFC oder HT-PEFC verwendet wird.

3. Aktives Hybridsystem, umfassend ein Brennstoffzellensystem nach einem der vorhergehenden Ansprüche sowie einen Energiespeicher (3), der insbesondere als Blei-, NiMH-, Li-Ionen-, NiCd-Akkumulator oder Supercap ausgebildet ist und dass ein Begrenzer vorgesehen ist, der die Brennstoffzellenspannung begrenzt.

4. Verfahren zur Regelung einer Brennstoffzellenspannung U_{BZ,Ist} in einem Brennstoffzellensystem, umfassend eine Brennstoffzelle (1), einen an die Brennstoffzelle (1) angekoppelten DC/DC-Wandler (2), der an einen Energiespeicher (3) ankoppelbar ist, und eine zwischen der Brennstoffzelle (1) und dem DC/DC-Wandler (2) angeordnete Steuer- und Regeleinheit (4), umfassend die folgenden Schritte:
- Aus einer Temperatur T_{az} wird mittels eines Begrenzungskennfeldes U_{BZ,min} = f (T_{BZ}), welches in der Steuer- und Regeleinheit (4) hinterlegt ist, eine Minimalgröße U_{BZ,min} ermittelt,
- Es wird eine Sollgröße U_{BZ,Soll} so gewählt, dass gilt U_{BZ,Soll} **≥** U_{BZ,min}.
- Die Steuer- und Regeleinheit (4) empfängt die Regelgröße U_{BZ,Ist} vergleicht die Regelgröße U_{BZ.Ist} mit einer vorgegebenen Sollgröße U_{BZ,Soll} und bestimmt daraus eine Stellgröße I_{DC/DC,Soll},
- die Steuer- und Regeleinheit (4) leitet die Stellgröße I_{DC/DC,Soll} an den DC/DC-Wandler (2) weiter,
- der DC/DC-Wandler (2) belastet in Abhängigkeit von der Stellgröße I_{DC/DC,Soll} die Brennstoffzelle (2) mit dem Strom I_{BZ,Ist}.

5. Verfahren nach Anspruch 4,
**dadurch gekennzeichnet,**
**dass** die Minimalgröße U_{BZ,min} als Begrenzungskennfeld U_{BZ,min} = f einer ungealterten Brennstoffzelle (1) in der Steuer- und Regeleinheit (4) hinterlegt wird.

6. Verfahren nach einem der Ansprüche 4 bis 5,
**dadurch gekennzeichnet,**
**dass** die Steuer- und Regeleinheit (4) die Regelgröße U_{BZ,Ist} mit der vorgegebenen Sollgröße U_{BZ,Soll} vergleicht und daraus eine Stellgröße I_{DC/DC,Soll} bestimmt, wobei gilt: U_{BZ,Soll} = U_{Bz,min}.

7. Verfahren nach einem der Ansprüche 4 bis 6,
**dadurch gekennzeichnet,**
**dass** überprüft wird, ob eine Alterung der Brennstoffzelle vorliegt, und dass bei erkannter Alterung der Brennstoffzelle auf Grundlage des Nennkennfelds der ungealterten Brennstoffzelle ein Nennkennfeld der gealterten Brennstoffzelle ermittelt wird. Dieser Vorgang wird nachfolgend als Altersanpassung bezeichnet

8. Verfahren nach Anspruch 7,
**dadurch gekennzeichnet**
**dass** die Altersanpassung solange fortgeführt wird, bis kein sinnvoller Betrieb der Brennstoffzelle mehr möglich ist.

## Claims

1. A fuel cell system for mobile applications, comprising a fuel cell (1) and a DC-to-DC converter (2) that is coupled to the fuel cell (1) and that can be coupled to an energy storage unit (3),
**characterized in that**
a control and regulation unit (4) is connected to the fuel cell (1) and to the DC-to-DC converter (2),
**in that** a limiting performance characteristic diagramm U_{FC,min} = f of the fuel cell (1) is stored in this control and regulation unit (4), and
**in that** the control and regulation unit (4) comprises a PID controller (7) that compares a setpoint value U_{FC,setpoint} to an actual value U_{FC,actual} of the fuel cell (1), then determines a correcting variable I_{DC/DC,setpoint} on this basis, and relays it to the DC-to-DC converter (2), whereby the setpoint value U_{FC,setpoint} is determined using the limiting performance characteristic diagramm U_{FC,min} = f (T_{FC}) that is dependent on a temperature T_{FC} and that is stored in the control and regulation unit (4).

2. The fuel cell system according to claim 1,
**characterized in that**
a fuel cell (1) of the PEFC, DMFC or HT-PEPC type is used.

3. An active hybrid system, comprising a fuel cell system according to one of the preceding claims, as well as an energy storage unit (3) that is especially configured as a lead, NiMH, Li-ion, NiCd accumulator or as a supercap, and a limiter is provided that limits the fuel cell voltage.

4. A method for regulating a fuel cell voltage U_{FC,actual} in a fuel cell system, comprising a fuel cell (1), a DC-to-DC converter (2) that is coupled to the fuel cell (1) and that can be coupled to an energy storage unit (3), and a control and regulation unit (4) arranged between the fuel cell (1) and the DC-to-DC converter (2), encompassing the following steps:
- on the basis of a temperature T_{FC}, a minimum value U_{FC,min} is determined by means of a limiting performance characteristic diagramm U_{FC,min} = f (T_{FC}) that is stored in the control and regulation unit (4),
- a setpoint value U_{FC,setpoint} is selected in such a way that U_{FC,setpoint} > U_{FC,min},
- the control and regulation unit (4) receives the controlled variable U_{FC,actual}, it compares the controlled variable U_{FC,actual} to a predefined setpoint value U_{FC,setpoint} and determines a correcting variable I_{DC/DC,setpoint} on this basis,
- the control and regulation unit (4) relays the correcting variable I_{DC/DC,setpoint} to the DC-to-DC converter (2),
- as a function of the correcting variable I_{DC/DC,setpoint}, the DC-to-DC converter (2) applies the current I_{FC,actual} to the fuel cell (1).

5. The method according to claim 4,
**characterized in that**
the minimum value U_{FC,min} is stored in the control and regulation unit (4) as the performance characteristic diagramm U_{FC,min} = f of an unaged fuel cell (1).

6. The method according to one of claims 4 to 5,
**characterized in that**
the control and regulation unit (4) compares the controlled variable U_{FC,actual} to the predefined setpoint value U_{FC,setpoint} and determines a correcting variable I_{DC/DC,setpoint} on this basis, whereby it holds true that I_{FC,actual} = I_{FC,min}.

7. The method according to one of claims 4 to 6,
**characterized in that**
it is checked whether the fuel cell has aged and, if ageing of the fuel cell is ascertained, a rated performance characteristic diagramm of the aged fuel cell is determined on the basis of the rated performance characteristic diagramm of the unaged fuel cell. This process is referred to below as age adaptation.

8. The method according to claim 7,
**characterized in that**
the age adaptation is continued until a reasonable operation of the fuel cell is no longer possible.

## Revendications

1. Système de pile à combustible pour applications mobiles, comprenant une pile à combustible (1) et un convertisseur CC/CC (2) couplé à la pile à combustible (1) et pouvant être couplé à un accumulateur d'énergie (3), **caractérisé en ce que** :
- une unité de commande et de réglage (4) est reliée à la pile à combustible (1) et au convertisseur CC/CC (2) ;
- un diagramme de caractéristiques limites U_{BZ,min} = f de la pile à combustible (1) est déposé dans cette unité de commande et de réglage (4) ; et
- l'unité de commande et de réglage (4) comprend un régulateur PID (7) qui compare une valeur de consigne U_{BZ,consigne} avec une valeur réelle U_{BZ}, réelle de la pile à combustible (1) et détermine sur cette base une grandeur de commande I_{CC/CC, consigne} et l'amène au convertisseur CC/CC (2), la valeur de consigne U_{BZ, consigne} étant déterminée avec le diagramme de caractéristiques limites U_{BZ, min} = f (T_{BZ}) qui est déposé dans l'unité de commande et de réglage (4) et est fonction d'une température T_{BZ.}

2. Système de pile à combustible selon la revendication 1, **caractérisé en ce qu'**on utilise une pile à combustible (1) du type PEFC, DMFC ou HT-PEFC.

3. Système hybride actif comprenant un système de pile à combustible selon l'une des revendications précédentes et un accumulateur d'énergie (3) qui se présente notamment sous la forme d'un accumulateur au plomb, au NiMH, au Li-ion ou au NiCD, ou sous la forme d'un supercondensateur (supercap), et en ce qu'est prévu un limiteur qui limite la tension de la pile à combustible.

4. Procédé de réglage d'une tension de pile à combustible U_{BZ}, réelle dans un système de pile à combustible comprenant une pile à combustible (1), un convertisseur CC/CC (2) couplé à la pile à combustible (1) et pouvant être couplé à un accumulateur d'énergie (3) et une unité de commande et de réglage (4) située entre la pile à combustible (1) et le convertisseur CC/CC (2), comportant les étapes suivantes :
- une grandeur minimale U_{BZ, min} est déterminée à partir d'une température T_{BZ} au moyen d'un diagramme de caractéristiques limites U_{BZ, min} = f (T_{BZ}) qui est déposé dans l'unité de commande et de réglage (4) ;
- une grandeur de consigne U_{BZ}, _{consigne} est choisie telle que U_{BZ, consigne} ≥ U_{BZ, min} ;
- l'unité de commande et de réglage (4) reçoit la grandeur de réglée U_{BZ}, réelle, compare la grandeur de réglé U_{BZ, réelle} avec une valeur de consigne prédéterminée U_{BZ, consigne} et détermine sur cette base une grandeur de réglage I_{CC/CC, consigne} ;
- l'unité de commande et de réglage (4) réachemine la grandeur de commande I_{CC/CC}, _{consigne} vers le convertisseur CC/CC (2) ;
- le convertisseur CC/CC (2) applique le courant I_{BZ, réel} à la pile à combustible (2) en fonction de la grandeur de réglage I_{CC/CC, consigne}.

5. Procédé selon la revendication 4, **caractérisé en ce que** la grandeur minimale U_{BZ, min} est déposée dans l'unité de commande et de réglage (4) en tant que diagramme de caractéristiques limites U_{BZ, min} = f d'une pile à combustible non vieillie (1).

6. Procédé selon l'une des revendications 4 à 5, **caractérisé en ce que** l'unité de commande et de réglage (4) compare la grandeur de réglée U_{BZ, réelle} avec la grandeur de consigne prédéterminée U_{BZ, consigne} et détermine sur cette base une grandeur de commande I_{CC/CC, consigne} avec U_{BZ,} consigne = U_{BZ, min}.

7. Procédé selon l'une des revendications 4 à 6, **caractérisé en ce qu'**il est vérifié s'il y a vieillissement de la pile à combustible et **en ce que**, si un vieillissement de la pile à combustible est identifié, un diagramme de caractéristiques nominales de la pile à combustible vieillie est établi sur la base du diagramme de caractéristiques nominales de la pile à combustible non vieillie ; dans ce qui suit, cette opération est appelée adaptation au vieillissement.

8. Procédé selon la revendication 7, **caractérisé en ce que** l'adaptation au vieillissement se poursuit jusqu'à ce qu'un fonctionnement utile de la pile à combustible ne soit plus possible.
